(19) **Europäisches Patentamt / European Patent Office / Office européen des brevets**

(11) **EP 3 071 039 B1**

(12) # EUROPEAN PATENT SPECIFICATION

(45) Date of publication and mention
of the grant of the patent:
**08.01.2020 Bulletin 2020/02**

(21) Application number: **14812641.0**

(22) Date of filing: **19.11.2014**

(51) Int Cl.:
*A01N 59/02* (2006.01)  *A01N 57/20* (2006.01)
*A01N 59/16* (2006.01)  *A01N 59/20* (2006.01)
*A01N 25/04* (2006.01)  *A01N 25/08* (2006.01)
*A01N 25/12* (2006.01)  *A01P 3/00* (2006.01)
*A01P 7/00* (2006.01)  *A01P 13/00* (2006.01)

(86) International application number:
**PCT/IB2014/066158**

(87) International publication number:
**WO 2015/075644 (28.05.2015 Gazette 2015/21)**

(54) **USE OF HYDROXYAPATITE AS A CARRIER OF BIOACTIVE SUBSTANCES FOR TREATING PLANTS**

VERWENDUNG VON HYDROXYAPATIT ALS TRÄGER VON BIOAKTIVEN STOFFEN ZUR BEHANDLUNG VON PFLANZEN

UTILISATION D'HYDROXYAPATITE EN TANT QUE SUPPORT DE SUBSTANCES BIOACTIVES POUR LE TRAITEMENT DE PLANTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2013 FR 1361357**
**28.03.2014 FR 1452749**
**28.03.2014 FR 1452750**

(43) Date of publication of application:
**28.09.2016 Bulletin 2016/39**

(73) Proprietor: **NDG Natural Development Group S.r.l.**
**40013 Castel Maggiore (Bologna) (IT)**

(72) Inventors:
• **MANFREDINI, Gianluca**
**I-40013 Castel Maggiore (Bologna) (IT)**
• **MERCURI, Rocco**
**I-06031 Bevagna (Perugia) (IT)**
• **ROVERI, Norberto**
**I-40133 Bologna (IT)**
• **LELLI, Marco**
**I-40063 Monghidoro (Bologna) (IT)**
• **MORSELLI, Silvana**
**I-40050 Case Speltra (Bologna) (IT)**
• **CECCHINI, Alice**
**I-40045 Ponte Della Venturina (Bologna) (IT)**

• **PIVA, Massimo**
**I-40013 Castel Maggiore (Bologna) (IT)**

(74) Representative: **Biggi, Cristina**
**Bugnion S.p.A.**
**Viale Lancetti 17**
**20158 Milano (IT)**

(56) References cited:
**EP-A1- 0 640 284**  **WO-A1-2007/137606**
**CH-A- 261 897**  **FR-A- 896 465**
**RO-B1- 122 830**

• **DATABASE WPI Week 199213 Thomson Scientific, London, GB; AN 1992-102146 XP002727010, & JP H04 46105 A (SANGI KK) 17 February 1992 (1992-02-17)**
• **STANIC V ET AL: "Synthesis, characterization and antimicrobial activity of copper and zinc-doped hydroxyapatite nanopowders", APPLIED SURFACE SCIENCE, ELSEVIER, AMSTERDAM, NL, vol. 256, no. 20, 1 August 2010 (2010-08-01), pages 6083-6089, XP027076744, ISSN: 0169-4332, DOI: 10.1016/J.APSUSC.2010.03.124 [retrieved on 2010-06-04]**

- **MAYER I ET AL: "Zinc ions in synthetic carbonated hydroxyapatites", ARCHIVES OF ORAL BIOLOGY, PERGAMON PRESS, OXFORD, GB, vol. 39, no. 1, 1 January 1994 (1994-01-01), pages 87-90, XP026167604, ISSN: 0003-9969, DOI: 10.1016/0003-9969(94)90040-X [retrieved on 1994-01-01]**

Remarks:
The file contains technical information submitted after the application was filed and not included in this specification

**Description**

FIELD OF THE INVENTION

The present invention relates to the use of a carbonate-substituted hydroxyapatite comprising at least one bioactive molecule for phytosanitary and/or nutritional treatment of plants, in particular vines.

BACKGROUND ART

In agriculture, there is a precarious balance between biotic agents such as fungi, bacteria, viruses and parasites and the actual defences of the plant in question.

In fact, plants generally have a resistance called pre-infection resistance in the sense that they have physical barriers, like their membrane walls, or chemical barriers obtained by the production and diffusion of antimicrobial substances. Plant resistance can be sufficient by itself and thus not require any treatment.

However, certain pathogens bring about an imbalance and plants are no longer able to defend themselves with their own mechanisms. Wood diseases are known pathologies of the plants, in particular of vines, that plants are not able to fight using their own natural defences. The most common wood diseases of vines are mildew or powdery mildew, affecting the vine leaves, and grey rot that affects the bunches of grapes.

Disease signs can appear in different forms such as marks of different colours and shapes (in patches or on the edges), developments of fungus mycelium, necrosis leading to the attacked leaves dropping, and wood infections, with the wood drying out to the point that the functionality of the conducting tissues is compromised.

For vines in particular, this also affects to a large extent both the quality and the quantity of wine produced, notably when the mildew spreads to the bunches.

The disease development vary according to the growth of the plant and the climatic conditions, notably depending on the temperature and humidity conditions.

Furthermore, sometimes plant diseases are not easily noticeable and often require special attention and observation using a magnifying glass so as to be more effective and to intervene in the early stage in order to prevent proliferation and to avoid disrupting further production.

To fight these diseases, sulphur-based treatments in powder form have been known for many years, in particular for fighting powdery mildew, and copper-based treatments for fighting other types of infections, notably cryptogamic infections. Copper is of interest since it does not cause induced resistance in pathogens, thus remaining just as active against the same pathogens over time.

Copper causes mechanical resistance due to the hardening of the walls of the plant organs, exercises preventive activity against pathogenic cryptogams and prevents the development of bacterial colonies.

Nevertheless, the repeated use of copper, before reaching strong doses, leads to certain drawbacks. The intensive and prolonged use of copper causes residual toxicity phenomena, affects the microflora in the soil, and the cultures that are sensitive to a certain phytotoxicity.

Organic farming limits the use of this metal compound and the doses are currently reduced two- or three- fold.

For some disorders, the use of copper must be combined with sulphur, which act as a fungicide and an insecticide. Sulphur therefore acts against powdery mildew on bunches of grapes but also against the development of *oïdium*. Sulphur penetrates into the fungal cell and since it is fat soluble, it penetrates and breaks the membrane, causing loss of water and therefore the destruction of said cell by dehydration.

Yet again, the activity of sulphur is conditioned by temperature, humidity levels and by its particle size since sulphur exerts its action by sublimation, i.e. by passing straight from the solid state to the gaseous state. Too much humidity and too low temperatures reduce the effectiveness. Beyond 28°C sulphur even becomes phytotoxic.

Sulphur is known in different particle sizes from 5 to 14 μm when it is obtained by distillation, from 15 to 150 μm by grinding or even in colloidal form by chemical processing. In all cases, the effectiveness of sulphur is linked to an intimate contact with the cells of the parasites.

Hence it would be interesting to be able to transport active substances, such as metal ions, using a carrier as close as possible to the site of attack of the parasites, such as cryptogams, bacteria, fungi and insects. This would also allow a very significant reduction in the quantities of active substance consumed and the initial quantities of active substance required. The problem of the persistence would be resolved, thanks to a controlled release of the active substance, and the application of such compounds would be possible in organic farming. It would be equally desirable to be able to achieve a prolonged and controlled release of nutritional substances such as fertilizers or growth enhancers to plants. It would equally desirable to be able to control the growth of weeds using a reduced amount of herbicides, that can be toxic for the environement.

Carriers of stoichiometric hydroxyapatite are known from JPH0556105 which describes the use of hydroxyapatite as a carrier for an antimicrobial metal ion selected from silver, copper and zinc to sterilize a soil from the presence of the plant pathogenic fungus Pythium. The action of the antimicrobial metal ion is limited to the soil since the publication specify that the agent is hardly absorbed into the plant. EP0640284 describes an antimicrobial sand coated with a stoichiometric hydroxyapatite carrier containing antimicrobial agents, such as silver, copper or zinc ions. The antimicrobial sand is mixed with the soil used to grow flowering plants, such as orchids, cyclamen etc., to sterilize the soil against the fungi: Rhizoctonia, Fusarium, Sclerotinia and Pyshium.

EP2029480 describes the use of hydroxyapatite for dental applications, oral hygiene or dental reconstruction, in the form of biologically active nanoparticles based on a carbonate substituted non-stoichiometric hydroxyapatite having a given crystallinity degree CD and aspect ratio AR (length/width).

Hydroxyapatite is well known in the prior art in different forms and for different applications. For example, synthetic hydroxyapatite constitutes an excellent biomaterial for biomedical applications, notably for bone reconstruction. Hydroxyapatite and synthetic substituted hydroxyapatite can be produced by different processes, by wet, hydrothermal, electrochemical, sol-gel or solid state synthesis. It can be found in different stoichiometric, morphological and crystalline forms.

## SUMMARY OF THE INVENTION

With respect to the known use of stoichiometric hydroxyapatite (i.e. hydroxyapatite base on calcium-phosphate ions not substituted by other ions), having the formula:

$$Ca_{10}(PO_4)_6(OH)_2$$

as a carrier of metal ions for sterilizing soil used to grow plants, the present invention provides the use of carbonate-substituted hydroxyapatite comprising bioactive molecules for treating plants, notably for applications in agriculture for antibacterial, antifungal and antiparasitic purposes with controlled release properties. Preferably, the carbonate-substituted hydroxyapatite is in microcrystalline form, i.e. in the form of aggregates.

In particular, the carbonate-substituted hydroxyapatite comprising bioactive molecules is intended for the phytosanitary treatment or nutritional treatment of the plants, in particular of the vines. Other plants that can be treated according to the invention are: tomato plant (Solanum lycopersicum), wheat (Triticum spp), pear tree (Pyrus spp), apple tree (Malus domestica) and vegetable plants, such as lettuce, spinach, cucurbits (for example cantaloupe, cucumber, pumpkin, squash and watermelon), onion, leek, peas.

The carbonate substitution is in the phosphate site of hydroxyapatite (site B). The carbonate-substituted hydroxyapatite comprising bioactive molecules of the invention is applied on the plants and penetrates into the plants through natural openings, as explained in details below, thus realizing an intimate contact with pathogen cells that can be present both on the plant surface or inside the plant.

Prior art JPH0556105 and EP 0 640 284 does not describe the use of carbonate-substituted hydroxyapatite comprising active principles. Prior art does not describe the use of carbonate-substituted hydroxyapatite comprising active substances for the treatment of plant pathologies by application of the carrier on the plant. Prior art teaches only a way to sterilize the soil used to grow the plants, in particular flowering plants (not crops).

RO122830 describes hydroxyapatite as a carrier for the pesticidal active agents thiocarbamate fungicide zineb and mancozeb. This document does not disclose carbonate-substituted hydroxyapatite.

With "bioactive molecule" in the present invention it is intended to refer to substances that have a phytosanitary activity, typically an anti-parasite activity or an herbicide activity. The bioactive molecule can also have a nutritional activity, for example fertilizers and growth enhancer substances. A bioactive molecule according to the invention can also have both a phytosanitary action and a nutritional action.

The bioactive molecule used in the invention can have anti-parasite activity, preferably anti-fungal, anti-microbial, anti-cryptogam and insecticide activity, and/or a nutritional function, depending on the dosage of use. The bioactive molecule can be both small organic molecules or metal ions. An example of small organic molecule is (N-(phosphonomethyl)glycine) having herbicide activity.

Preferably the bioactive molecule is a metal ion, such as Cu, Zn and S. Such ions have an anti-parasite action (notably an anti-fungal activity) as well as a nutritional role, in particular Zn, depending on the dosage used. Other examples of bioactive molecules useful for the purposes of the invention are phosphorus, calcium, carbonate (acting as fertilizers), and essential oils of plant origin, such as mint, thyme, rosemary, sesame, soya, cloves, garlic, lemon or cinnamon (that can have both nutritional activity and mild anti-parasite activity).

For phytosanitary treatment it is intended the treatment or prevention of plant diseases caused by parasites such as cryptogams, bacteria, fungi and insects. Preferred diseases treated with the product of the invention are: downey mildew (caused by Plasmopara viticola), powdery mildew (caused by Erysiphe nectar), Grey mould (caused by Botrytis cinerea), black rot (caused by Guignardia bidwellii), grapevine crown gall (caused by Agrobacterium vitis), late blight of tomatoes (caused by Phytophthora infestans), fusarium head blight of wheat (caused by Fusarium graminearum and Fusarium culmorum), apple scab (caused by Venturia inaequalis), pear scab (caused by Venturia pirina), brown spot of pear (caused by Stemphylium vesicarium), Lettuce mildew (caused by Bremia lactucae), Spinach mildew (caused by Peronospora spinaceae), Cucurbits mildew (caused by Pseudoperonospora cubensis on cantaloupe, cucumber, pumpkin, squash and watermelon), Onion mildew (caused by Peronospora schleideni), Leek mildew (caused by Phytophtora porri), Peas mildew (caused by Peronospora pisi), diseases caused by the insects: European grapevine moths (Eupoecilia ambiguella) and vine mealybug (Planococcus ficus).

For "phytosanitary treatment" it is also intended herbicide treatment of plants aiming to eradication of weeds.

The invention refers also to the use of a substituted-carbonate hydroxyapatite comprising bioactive molecules for treatment of plants, in particular vines, made of hydroxyapatite substituted with at least a carbonate ion having a degree of crystallinity comprised between 25 and 59%, preferably between 25 and 40%. The carbonate substitution can be a substitution of phosphate ions (site B) and/or of hydroxyl ions (site A) of hydroxyapatite; preferably the carbonate substitution is a substitution of phosphate ions (site B).

The carbonate substitutionhas the advantage to lower the crystallinity degree of hydroxyapatite, which thus become more amorphous. The amorphous state leads to an increase of solubility of the carbonate-substituted hydroxyapatite structure in a biological environment, with the advantage that the bioactive molecules release is improved and becomes more effective.

The invention refers also to a carbonate-substituted hydroxyapatite having the above characteristics, comprising a bioactive molecule adsorbed thereto, thus yielding a functionalized carbonate-substituted hydroxyapatite.

For the scope of the present invention, "carbonate-substituted hydroxyapatite functionalized with a bioactive molecule" is a definition equivalent to say that the bioactive molecule is "adsorbed" on the carbonate-substituted hydroxyapatite.

## BRIEF DESCRIPTION OF THE DRAWINGS

Figure 1 shows the reference scheme for the evaluation of the disease severity (%) on the leaves;
Figure 2 shows the results of the first laboratory test on Plasmopara viticola;
Figure 3 shows the results of the second laboratory test on Plasmopara viticola;
Figure 4 shows the results of the first greenhouse test on Plasmopara viticola;
Figure 5 shows the results of the second greenhouse test on Plasmopara viticola;
Figure 6 shows the results of the third greenhouse test on Plasmopara viticola;
Figure 7 shows the results of the fourth greenhouse test on Plasmopara viticola;
Figure 8 shows the results of the fifth greenhouse test on Plasmopara viticola;
Figure 9 shows the results of the laboratory test on Erysiphe necator;
Figure 10 shows the results of the first laboratory test on Botrytis cinerea;
Figure 11 shows the results of the second laboratory test on Botrytis cinerea;
Figure 12 shows the results of the second laboratory test on Botrytis cinerea ;
Figure 13 shows the results of the first laboratory test on Guignardia bidwellii ;
Figure 14 shows the results of the first greenhouse test on Plasmopara viticola ;
Figure 15 shows the results of the first laboratory test on mortality of Eupoecilia ambiguella larvae ;
Figure 16 shows the results of the second laboratory test on mortality of Eupoecilia ambiguella larvae ;
Figure 17 shows the results of the first laboratory test on Planococcus ficus ;
Figure 18 shows the results of comparative tests of the herbicidal activity against Convolvulus spp of the product of the invention ;
Figure 19 shows the results of comparative tests of the herbicidal activity against Cynodon spp.of the product of the invention ;
Figure 20 shows the results of comparative tests of the herbicidal activity against Sorghum halepense of the product of the invention ;

## DETAILED DESCRIPTION OF THE INVENTION

The present invention relates to the use of carbonated-substituted hydroxyapatite as comprising bioactive molecules for the phytosanitary treatment and/or nutritional treatment of plants, in particular of vines. The invention is suitable for treating all types of plants, particularly for treating vines. Other plants that can be treated with the invention are tomato plant (Solanum lycopersicum), wheat (Triticum spp), pear tree (Pyrus spp), apple tree (Malus domestica) and vegetable plants, such as lettuce, spinach, cucurbits (for example, cantaloupe, cucumber, pumpkin, squash and watermelon), onion, leek, peas.

The hydroxyapatite is substituted with at least a carbonate ion.

In a preferred embodiment, the hydroxyapatite of the invention is substituted by at least a carbonate ion, and has the following formula:

$$Ca_{(10)}(PO_4)_{(6-y)}(CO_3)_y(OH)_2$$

wherein y is a number comprised between 0.002 and 0.6 and having a crystallinity degree comprised between 25 and 59%, preferably between 25 and 40%.

In a further preferred embodiment of the invention, the carbonate substitution can occupy site B ($PO_4^{3-}$ phosphate ions) as per general formula above. In the carbonate-substittued hydroxyapatite structure considered in the present invention, the substitution is on site B, with a percentage of carbonate occupying the B site that is greater than or equal to 55% in weight, even more preferably comprised between 90 and 100% in weight of the total weight of carbonate contained in the carbonate-substituted hydroxyapatite.

The overall content of carbonate in the carbonate-substituted hydroxyapatite according to the invention is from 1 to 20%, preferably from 5 to 15% in weight of the total carbonate-substituted hydroxyapatite structure.

The carbonate ion substitutions at site B are very significant since they allow the whole carbonate-substituted hydroxyapatite structure to increase its solubility in a biological environment.

Preferably, the carbonate-substituted hydroxyapatite carrier is in the form of particles smaller than 2 $\mu$m, preferably sized between 0.2 and 0.9 $\mu$m. The carbonate-substituted hydroxyapatite particles are preferably in crystalline form, i.e. they are joined together to create aggregates of carbonate-substituted hydroxyapatite particles (also referred to in this application as "clusters" or "crystals" or "microcrystals" or "microcrystalline aggregates", all these terms having the same meaning as "aggregates" according to the invention). These aggregates have micrometric dimensions, with a size comprised between 0.5 and 25 $\mu$m, more particularly between 0.5 and 5 $\mu$m and having a significant surface area. In particular, carbonate-substituted hydroxyapatite aggregates useful according to the present invention have a surface area comprised between 60 and 120 $m^2$/g, more particularly between 70 and 90 $m^2$/g.

The aggregates of carbonate-substituted hydroxyapatite have the advantage of a larger surface area with respect to single carbonate-substituted hydroxyapatite particles and therefore allows adsorbing more active principles and/or bioactive molecules and controlling the release of them in the environment. Thus for a small quantity of carbonate-substituted hydroxyapatite it is possible to transport a significant number of bioactive molecules which allows the activity and biological effectiveness of the molecules to be increased further.

The bioactive molecules having anti-fungal, anti-microbial, anti-cryptogams, insecticide and herbicide activity used in the present invention can be both small organic molecules or metal ions. An example of small organic molecule is (N-(phosphonomethyl)glycine) having herbicide activity.

Preferably the bioactive molecules are: metal ions, such as Cu, Zn and S. Such ions have an anti-parasite action as well as a nutritional role, in particular Zn, depending on the dosage used. Other examples of bioactive molecules useful for the purposes of the invention are phosphorus, calcium, carbonate (acting as fertilizers), and essential oils of plant origin, such as mint, thyme, rosemary, sesame, soya, cloves, garlic, lemon or cinnamon cinnamon (that can have both nutritional activity and mild anti-parasite activity).

For phytosanitary treatment it is intended the treatment or prevention of plant diseases caused by parasites such as cryptogams, bacteria, fungi and insects. Preferred diseases treated with the product of the invention are: downey mildew (caused by Plasmopara viticola), powdery mildew (caused by Erysiphe nectar), Grey mould (caused by Botrytis cinerea), black rot (caused by Guignardia bidwellii), grapevine crown gall (caused by Agrobacterium vitis), late blight of tomatoes (caused by Phytophthora infestans), fusarium head blight of wheat (caused by Fusarium graminearum and Fusarium culmorum), apple scab (caused by Venturia inaequalis), pear scab (caused by Venturia pirina), brown spot of pear (caused by Stemphylium vesicarium), Lettuce mildew (caused by Bremia lactucae), Spinach mildew (caused by Peronospora spinaceae), Cucurbits mildew (caused by Pseudoperonospora cubensis on cantaloupe, cucumber, pumpkin, squash and watermelon), Onion mildew (caused by Peronospora schleideni), Leek mildew (caused by Phytophtora porri), Peas mildew (caused by Peronospora pisi), diseases caused by the insects: European grapevine moths (Eupoecilia ambiguella) and vine mealybug (Planococcus ficus).

For "phytosanitary treatment" it is also intended herbicide treatment of plants aiming to eradication of weeds.

The bioactive molecules are adsorbed on to the carbonate-substituted hydroxyapatite carrier, thus obtaining a functionalized carbonate-substituted hydroxyapatite.

The absorption of such substances on carbonate-substituted hydroxyapatite can be performed by all processes known to a person skilled in the art. The crystallised carbonate-substituted hydroxyapatite aggregate has an inner zone that is purely crystalline and an outer peripheral zone with electrical charges that are not completely neutral, which allows the bioactive molecules to be retained.

For example, in the case of adsorption of copper and/or sulphur on carbonate-substituted hydroxyapatite particles, the functionalization of carbonate-substituted hydroxyapatite can be obtained:

- for copper starting from: sulfate (II) pentahydrate, copper chloride, copper oxychloride, copper hydroxide, copper oxide or a mixture of these compounds.
- for sulphur starting from: soluble sulphur, micronised sulphur, atomised sulphur or a mixture of these compounds.

Hydroxyapatite in itself also has an effect on plants. In fact, it contains elements that contribute to improving the natural resistance of the plant. Calcium in particular is one of the trace elements with which the plant is fed, which participates in balancing plants, activates certain enzyme processes and eliminates certain toxic compounds. Furthermore, the hydroxyapatite crystals have their own antibacterial activity.

Also, the absorption of bioactive molecules on carbonate-substituted hydroxyapatite microcrystals, and the use of carbonate-substituted hydroxyapatite as a carrier of these molecules, leads to a synergic action on the plants for great effectiveness in the plant treatment, in particular for preventing and fighting fungal and bacterial diseases in plants. The invention is particularly suitable for treating vines, notably for fighting localised diseases (for example, mildew, powdery mildew, grey rot) or systemic and more complex diseases.

For the purposes of the present invention the carbonate-substituted hydroxyapatite comprising a bioactive molecule is in the form of aggregates of a plurality of carbonate-substituted hydroxyapatite particles.

For the use according to the invention, carbonate-substituted hydroxyapatite is preferably integrated into a composition, preferably in the form of microcrystalline aggregates. This composition may be in all forms, notably powder, granules, liquid or gel. According to a preferred embodiment, aggregates of carbonate-substituted hydroxyapatite are dispersed in a uniform way in water. The pH of the composition in liquid form is preferably greater than 5 so as to prevent that the microcrystals of carbonate-substituted hydroxyapatite undergo partial or total hydrolysis.

Such a liquid composition allows foliar application, in particular by spraying. The structure and micrometric size of the carbonate-substituted hydroxyapatite crystals mean that they are dispersed uniformly within the volume of the micronised droplets during spraying, thus allowing good distribution throughout the total volume used for application and consequently more uniform distribution on the application surface. According to the type of atomiser used for the application of carbonate-substituted hydroxyapatite, it is possible to have droplets whose diameter varies between 50 and 800 $\mu$m. In order to avoid or limit drifting of very small droplets and discharge of very large droplets, and to guarantee better application on the surface to be treated, it is possible to use spraying means that allow droplets sized between 150 and 250 $\mu$m to be obtained.

Once applied, the aggregated particles adhere to the leaf without needing to use anti-stripping agents in the composition. In fact, according to their surface, their size, their morphological irregularities and their electrostatic characteristics, the carbonate-substituted hydroxyapatite crystals cling onto the surface of the leaves, thus ensuring optimal adhesion resistance to run off water, unlike currently existing products that are carried away by rain or dew.

The use of the compositions, applied per hectare, is to be adapted according to the climatic conditions encountered, the season and the protection and nutrition strategies of the soil. By way of example for a vineyard, a suitable example of use corresponds to a quantity of water used in the order of 250 l/ha for fully developed plants, with a density in the order of 4000 stumps/ha, in variable concentration, formulated from 2.5 to 5% in particles of carbonate-substituted hydroxyapatite in weight in relation to the total weight of the liquid composition.

Once applied to the plant, the bioactive molecules may be directly released or the carbonate-substituted hydroxyapatite microcrystals may transport these substances into the intercellular spaces. Bioactive molecules are thus released by hydrolysis, in proximity to targets, in particular in proximity to target parasites such as fungi and bacteria.

In fact, the microcrystalline aggregates of carbonate-substituted hydroxyapatite penetrate into the plant according to passive diffusion following the discharge of fluids, such as carbon dioxide and water, through the natural openings of the plant tissues. Inside the plant, the carbonate-substituted hydroxyapatite behaves like a "sol-gel": it is not stagnant in a liquid medium, it moves in the xylem and the phloem by following the circulating lymph. Hence there is no risk of accumulation in the plant. When the carbonate-substituted hydroxyapatite meets a pathogen, the aggregate decomposes as the more acidic wall of the microorganism promotes dissolution and the release of bioactive molecules carried by the carbonate-substituted hydroxyapatite, which can therefore act against the pathogen.

The bioactive molecules (for example, phosphorus, calcium and carbonate) follow the lymphatic flow and exercise their activity in particular as fertilisers for improving the development of the plant and/or reinforcing its natural defences. Unlike the conventional methods, there is therefore no action on the intracellular metabolic pathways, but a contact action between the functional elements of the carbonate-substituted hydroxyapatite aggregates and the pathogens on an intercellular level or at the surface of the plants.

The active principles and bioactive molecules can therefore act when they are sprayed onto the surface but also in depth into the core of the plant tissues treated.

The carbonate-substituted hydroxyapatite particles can also be used for application on the trunk, on the wood of plants or on their roots according to the aim of the application.

The invention relates to the treatment of plants. It may refer to the contribution of nutrients to the plants or to ions or molecules likely to fight pathogens. Therefore the carbonate-substituted hydroxyapatite particles can be used to fight or prevent certain diseases. They are suitable for all types of plants, notably but not only vines, and are particularly useful for agriculture and wine growing.

Carbonate-substituted hydroxyapatite particles have the following formula:

$$Ca_{(10)}(PO_4)_{(6-y)}(CO_3)_y(OH)_2$$

wherein y is a number comprised between 0.002 and 0.6.

The crystallinity degree is defined by the formula provided by Landi et al (*J.Eur. Ceram. Soc., 2000, 20, 2377-2387*) :

$$CD= (1-X/Y)*100$$

where:

- Y = the height of maximum diffraction at $2\theta = 33°$
- X = the height of background diffraction at $2\theta = 33°$ of an X-ray particle diffraction diagram.

Carbonate-substituted hydroxyapatite according to the invention has a crystallinity degree CD comprised between 25 and 59%, preferably between 25 and 40%.

The carbonate-substituted hydroxyapatite according to the invention comprises from 1 to 20%, preferably from 5 to 15% in weight of hydroxyapatite substituted by a carbonate ion of the total of the carbonate-substituted hydroxyapatite structure.

In the carbonate-substituted hydroxyapatite structure considered in the present invention, the substitution is preferably on site B.

The ratio of substitution on site A/substitution on site B is comprised between 0.10 and 0.60 and even more preferably the ratio is comprised between 0.20 and 0.40. Furthermore, the carbonate-substituted hydroxyapatite according to the invention has a high carbonate ion substitution rate since the substitution in carbonate ions on site B is greater than or equal to 55% in weight, even more preferably comprised between 90 and 100% in weight, of the total weight of carbonate contained in the hydroxyapatite.

These carbonate ion substitution parameters at site B are very significant since they allow the whole carbonate-substituted hydroxyapatite structure to increase its solubility in a biological environment.

Preferably, the carbonate-substituted hydroxyapatite particles are smaller than 2 $\mu$m, preferably sized between 0.2 and 0.9 $\mu$m. They are preferably in crystalline form. The microcrystalline carbonate-substituted hydroxyapatite aggregates according to the present invention have a surface area comprised between 60 and 120 $m^2$/g, more particularly between 70 and 90 $m^2$/g.

The carbonate-substituted hydroxyapatite aggregates in themselves have a pH that is subject to variations over time and that also varies according to the molecules adsorbed thereto. For example, the carbonate-substituted hydroxyapatite crystals according to the invention functionalised with copper sulphate have a pH comprised between 3 and 4.5. However, when the carbonate-substituted hydroxyapatite microcrystals are put into solution, the pH of the solution must be greater than 5 to maintain the structural and functional stability of the carbonate-substituted hydroxyapatite. The pH of the solution is preferably comprised between 5.5 and 7.5. According to another aspect, the invention relates to carbonate-substituted hydroxyapatite particles comprising at least one bioactive substance. The carbonate-substituted hydroxyapatite comprises copper ions and/or one sulphur ions and/or zinc ions adsorbed thereto. Preferably, the carbonate-substituted hydroxyapatite further contains essential oils one or more essential oil(s) of plant origin such as mint, thyme, rosemary, sesame, soya, cloves, garlic, lemon or cinnamon.

Aggregates of carbonate-substituted hydroxyapatite particles have a size comprised between 0.5 and 25 $\mu$m, preferably comprised between 0.5 and 5 $\mu$m.

A composition comprising at least one carbonate-substituted hydroxyapatite particle or at least one aggregate of carbonate-substituted hydroxyapatite particles according to the invention is functionalized with bioactive molecules. Preferably, such a composition comprises between 5 and 70% in weight of carbonate-substituted hydroxyapatite particles and/or aggregates in relation to the total weight of the dry material of the composition, even more preferably between 6 and 60%.

The invention is now illustrated by manufacturing process examples, composition examples and uses examples.

Manufacturing example 1

The carbonate-substituted hydroxyapatite is synthesised by mixing phosphoric acid with a composition comprising calcium hydroxide and calcium carbonate previously dispersed in a suitable quantity of water.

The reaction requires about 12 to 48 hours, more particularly about 15 to 30 hours. Following the suspension of microcrystals a solution of sulfate (II) pentahydrate and copper chloride is added, previously dissolved in a suitable quantity of water.

Once these two solutions are combined, they are mixed to allow adsorption of copper ions in the inorganic crystals of carbonate-substituted hydroxyapatite.

The functionalization reaction by the copper solution takes about 12 to 72 hours, more particularly from 24 to 60 hours.

Manufacturing example 2

The carbonate-substituted hydroxyapatite is synthesised by mixing phosphoric acid with a composition comprising calcium hydroxide and calcium carbonate, previously dispersed in a suitable quantity of water.

The reaction requires about 12 to 48 hours, more particularly about 15 to 30 hours. Following the suspension of microcrystals, a suspension of sulphur and micronized sulphur dispersed in a suitable volume of water is added.

Once these two solutions are combined, they are mixed to allow adsorption of sulphur ions in the inorganic crystals of carbonate-substituted hydroxyapatite.

The reaction requires about 2 to 10 hours, more particularly about 4 to 6 hours.

Manufacturing example 3

The carbonate-substituted hydroxyapatite is synthesised by mixing phosphoric acid with a composition comprising calcium hydroxide and calcium carbonate, previously dispersed in a suitable quantity of water.

The reaction requires about 12 to 48 hours, more particularly about 15 to 30 hours. Following the suspension of microcrystals, a suspension of essential olis dispersed in a suitable volume of water is added.

Once these two solutions are combined, they are mixed to allow adsorption of essential oils on the inorganic crystals of carbonate-substituted hydroxyapatite.

The reaction requires about 2 to 10 hours, more particularly about 4 to 6 hours.

Composition examples

A sulphur based composition may comprise the following formulation:

- Sulphur hydroxyapatite 60% (carbonate-substituted hydroxyapatite with sulphur ions adsorbed thereto)
- Distilled water 32.9%
- Xanthan gum 1%
- Glycerine 4%
- Benzoic acid 2%

A copper based composition may comprise the following formulation:

- Copper hydroxyapatite 10% (carbonate-substituted hydroxyapatite with copper ions adsorbed thereto)
- Distilled water 78%
- Xanthan gum 1%
- Glycerine 4%
- Benzoic acid 1.5%

A composition according to the invention may also be a composition comprising a mixture of the two compositions previously described.

Example of use

In order to optimise the functional properties and structural stability of the liquid compositions comprising the hydroxyapatite particles, a use can be implemented according to the following recommendations in particular:

- Shaking the composition before use to put the particles and/or aggregates of particles back in suspension in the composition;
- Using an atomiser that ensures complete and uniform wetting of the vegetation and prevents too low or too high volumes;

- Using quantities of water ranging from 60L/ha to 250L/ha on fully developed plants, avoiding excessive amounts of water which create run off;
- Reducing the amount of product per hectare in the event of manual application;
- Controlling the pH of the solution in water so that it is greater than 5.


EXPERIMENTAL TESTS ON VINE DISEASES

| LEGEND OF THE TESTED FORMULATIONS | | |
|---|---|---|
| All the formulations contain water, hydroxyapatite substituted with carbonate ions and functionalized with metal ions and/or essential oils; PV8, PV8/2 and PV9 contain carbonate hydroxyapatite further substituted with Cu ions | | |
| | | |
| **Code** | **Metal ions (functionalization) (g/kg formulation)** | **Note** |
| PV1 | Cu=50 | - |
| PV2 | Cu=5; Zn=18 | - |
| PV3 | Cu=50 | Suspending agent used |
| PV4 | Cu=25; Zn=18 | Suspending agent used |
| PV5 | mix 1.2% PV1 + 2.4% PV2 | - |
| PV6 | Cu=50 | - |
| PV7 | Cu=50 | - |
| PV8 | Cu=50 (substituent ion) | Copper-apatite |
| PV8/2 | Cu=50 (substituent ion) | Copper-apatite tested at double concentration |
| PV9 | Cu=50 (substituent ion) + 50 (functionalization ion) | Copper-apatite |
| BRBC | Cu=50 + essential oils | - |
| BC | Zn=20 + essential oils | - |
| BRBC2 | Cu=20; Zn=10 | - |
| BC2 | Zn=20 + essential oils | - |
| OT | Z=400 | - |
| NEW REP | Z=200; Zn=20 + essential oils | - |
| REP | Zn=20 + essential oils | - |
| MDE | Cu=45 + essential oils | - |
| FDLN1 | Cu=50 + essential oils | - |
| FDLN2 | Cu=20; Zn=10 + essential oils | - |
| FDLN3 | Cu=20; Zn=10 + plant extracts in powder form | - |
| FDLN4 | Cu=20; Zn=10 + plant extracts in hydroalcoholic solution | - |

1. INTRODUCTION

Several formulations based on hydroxyapatite substituted with carbonate ions and functionalized with copper, zinc, sulphur and/or essential oils were tested against pathogens fungi of vines and insects affecting vines.
Results are referred to the trials performed in laboratory and/or in greenhouse depending on the growth and development conditions required by each target considered (fungal pathogen/insect).

| TARGET | LABORATORY TEST | GREENHOUSE TEST |
|---|---|---|
| Plasmopara viticola | x | x |
| Erysiphe necator | x | - |
| Botrytis cinerea | x | - |
| Guignardia bidwellii | x | x |
| Planococcus ficus | x | - |
| Eupoecilia ambiguella | x | - |

Tests in laboratory and greenhouse were performed in order to get a first indication on the biological efficacy of the tests agents, in standard and repeatable conditions, by quick protocols that are qualified for a general assessment of the biological efficiency of test agents.

For laboratory tests, test agents were applied on the fungal forms of reproduction (conidia or zoospores) and on the insects in a specific instar, which were grown in a proper media for a period of time; so the results are referred to the biological efficiency of the test agents on fungal pathogens and insects developed in the most favourable conditions of growth, not comparable to environmental conditions.

The greenhouse tests were performed treating potted vines (cv. Riesling), at the phenological stage correspondent to BBCH 16 (five to ten leaves), using a sprayer comparable in terms of pressure (2.5 bar), speedy (2 km/h) and nuzzle type (0.15 - green), with the equipment usually employed for the application in vineyard (SprayLab®, Schachtner, Germany). Treated potted vines have been inoculated with a determinate concentration of spores, and then a favourable environment and a precise time were respected for the disease incubation. These conditions allowed achieving results more referable to the real action of the test agents in vineyards. Based on precise protocols of the Institut für Phytomedizin greenhouse tests were conducted only on two fungal pathogens: *Plasmopara viticola* and *Guignardia bidwellii.* Nevertheless, all the formulations were tested in greenhouse on *Plasmopara viticola* to evaluate their conformity to the nebulization in terms of flow through nuzzles and homogeneity of distribution on the treated foliar tissues.

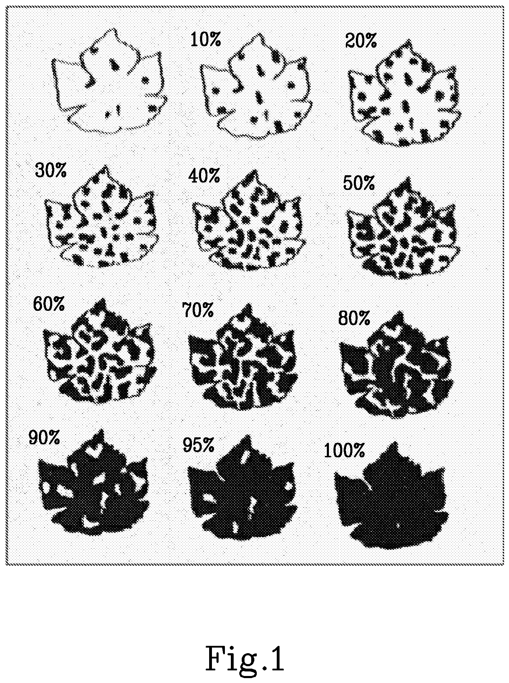

The disease severity (%) was attributed on predetermined leaves in each plant by comparing the leaves with a reference schema (see Fig. 1). The average disease severity was calculated on each plant and between replications of each treatment, while the standard deviation was calculated between averages of the replications. Results are presented per target, including a brief description of the materials and methods employed to perform the experimental trials.

## 2. CALCULATION OF THE BASIS AMOUNT

The basis amount was determined respecting the criteria exposed in the guideline "Rebschutz 2014" edited by the Regierungsprasidium Darmstadt (Germany). It includes the list of fungicides and insecticides to be used as comparison agent in the trials and it announces the factor of correlation between the increasing amount of water per hectare and the increasing amount of test agent per hectare during the phenological cycle (BBCH-Code): at the beginning of the cycle the minimum amount of test agent is required (basis amount) sprayed by a minimum amount of water; in full canopy, the initial amount of test agent and water is multiplied per factor 4. Finally, considering the amount of water employed, three grades of concentration are defined.

The basis amount schema was respected for the comparison agents, while the test agents were examined according to test doses expressed in volume/volume, in order to define finally the recommendable basis amount expressed in weight, due to the classification as fertilizers, despite they are delivered in liquid form. The test doses were established considering the results achieved by previous applications of the test agents in experimental vineyards with 4,000-6,000 vines/ha, employing a classic low-volume sprayer and using 250 Uha of water in full vegetation (BBCH 75).

In the greenhouse tests, test agents were compared to water and to comparison agents, which were applied respecting each basis amount, multiplied by the factor 1.25 that correlates the increase of the basis amount with the correspondent phenological stage (BBCH 16) of the potted vines. The same basis amounts of the comparison agents and the concentrations of the test agents were applied for the laboratory trials.

## 3. DOWNY MILDEW (*Plasmopara viticola*)

### 3.1 Laboratory Test

To evaluate the biological efficacy of test agents *in vitro*, four petri dishes containing water agar medium were prepared per each treatment: control (water), comparison agent and test agents. For inoculum preparation, grapevine leaves with fresh and prominent symptoms of *Plasmopara viticola* were collected from infected potted vines grown in greenhouse. Discs of 2 cm in diameter were cut from the infected leaves, taking care to select the lower leaf surface rich in sporulation as white, cottony growth. A leaf disc was imprinted down on every petri dish in order to transfer the sporulation on the water agar medium. After leaf discs have been removed, four drops of each test product were filled above the inoculum, which then was covered by a cover slip. The petri dishes were incubated at the environmental temperature and in the dark and finally they were observed at the microscope (magnification 40x) after 1, 3 and 20 hours.

In the last observation, the biological efficacy of the test agents was determined in terms of zoospore release, evaluating the ratio between full sporangia (inactive or degenerated) and empty sporangia (having released zoospores actively) of one hundred sporangia.

In the first test, the biological efficacies of the following treatments were compared after 1, 3 and 20 hours:

- Control (water): a good value of zoospores release was noted;
- Folpan 80 WDG® (a.i. Folpet) (0.323% p/v): no zoospores were released;
- PV1 (2.4% v/v): within the first 3 hours the zoospore release stopped, with a minimal increase in 20 hours; PV1 is constituted of copper sulphate (Cu 50 g/kg);
- PV2 (2.4% v/v): within the first 3 hours the zoospore release stopped, with a notable increase in 20 hours; PV2 differs from PV1 for lower concentration of copper (5 g/kg) and presence of zinc (18 g/kg).

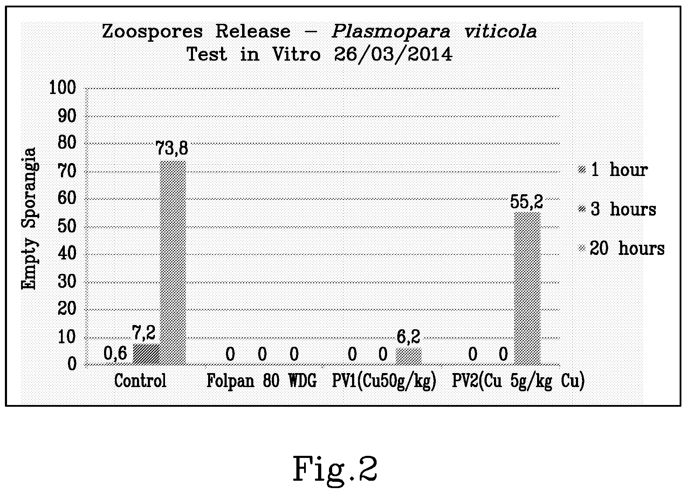

See Fig. 2 for a schematic view of the results.

In the second test, the biological efficacies of the following treatments were compared after 20 hours:

- Control (water): a very good value of zoospores release was noted;
- Cuprozin Progress® (abbr. CP) (a.i. Cupper Hydroxide) (0.323% v/v): no zoospores were released;
- PV1 (2.4% v/v): no zoospores were released, this outcome reinforce the positive result showed by the previous test; PV1 is constituted of copper sulphate (Cu 50 g/kg);
- PV3 (2.4% v/v): no zoospores were released; PV3 differs from PV1 for presence of a suspending agent;
- PV4 (2.4% v/v): no zoospores were released; PV4 differs from PV2 for presence of a suspending agent and higher concentration of copper (25 g/kg);
- PV5 (PV1 1.2% + PV2 2.4% v/v): no zoospores were released;
- PV6 (2.4% v/v); no zoospores were released; PV6 differs from PV1 for presence of a mixture of fertilizers.

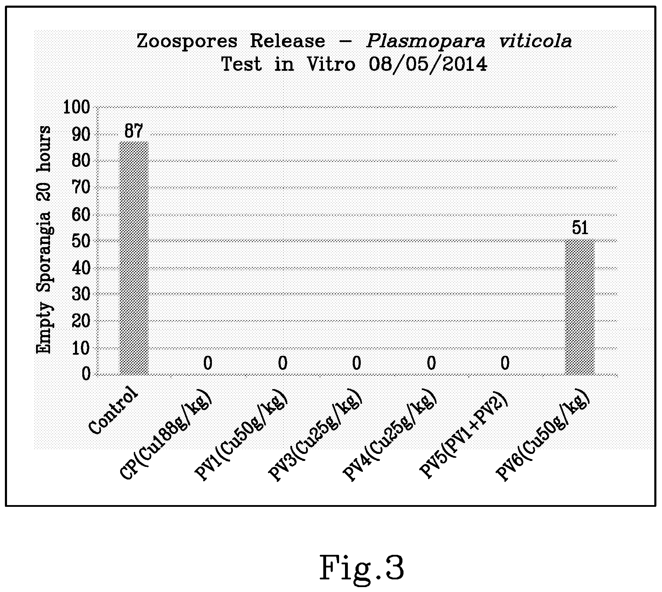

See Fig. 3 for a schematic view of the results.

3.2 Greenhouse Test

The greenhouse test was performed to evaluate the protective efficacy of the test agents. To conduct this test, 6 potted vines were employed per each treatment: control (water), comparison agent and test agents. Potted vines were selected for adequate height, good health status and number of unfolded leaves (minimum five). They were prepared for the treatment, tying the shoot just above the first five leaves eligible for the final disease assessment. On day "1" potted vines were treated with the experimental sprayer (SprayLab®; Schachtner, Germany) and after 24 hours the inoculation of the fungal pathogen was performed on the treated plants.

The inoculum was prepared collecting leaves with fresh and prominent symptoms of *Plasmopara viticola* from infected potted vines grown in the greenhouse. Infected leaves were washed by water, manually sprayed on the low surface, in order to get an aqueous solution rich in sporangia. Sporangia concentration was adjusted in a Thoma® chamber at the microscope (magnification 40x), to $1*10^6$ sporangia/ml (minimum). The sporangia suspension was sprayed manually on the treated plants taking care to wet the lower surface of the five leaves below the tying point of the shoot homogeneously.

After inoculation, the table with potted vines was covered with a black plastic tarp and left in the cellar for the first day of incubation. In order to evaluate the curative efficacy of the test agents, inoculation with *P. viticola* was conducted at the first day and after 24 hours of incubation the treatments were performed (once the surface of the leaves was as dry as possible).

The third day, the treated, inoculated and incubated plants were uncovered and transferred and cultivated into the greenhouse under controlled growth conditions. The eighth day, potted vines were abundantly wet, spraying water on the foliage, then, they were covered again with a black plastic tarp and transferred into the cellar to favour sporulation. After 24 hours, the plants were uncovered. The disease severity was determined by observing the five leaves below the tying point of the shoot in each potted vine. Possible symptoms of phytotoxicity were monitored in each trial.

In a test, simultaneously to the evaluation of the protective efficacy, a rain stability test was performed to estimate the resistance of the test agents to the run off caused by rain: In order to conduct this test, 3 hours after the application of test agents, water and comparison agents an equal number of potted vines were subjected to a shower of water comparable to a rain event of 18 mm precipitation.

In the first test, protective efficacies of the following treatments were compared:

- Control (water): very good value of disease severity;
- Folpan 80 WDG® (a.i. Folpet) (0.323% p/v): good protective efficacy;
- PV1 (2.4% v/v): good protective efficacy, similar to the comparison agent; PV1 is constituted of copper sulphate (Cu 50 g/kg);
- PV2 (2.4% v/v): unacceptable protective efficacy; PV2 differs from PV1 for lower concentration of copper (5 g/kg) and presence of zinc (18 g/kg).

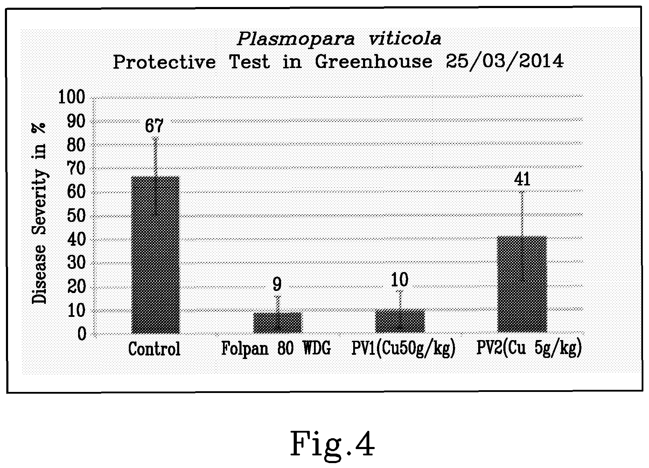

See Fig. 4 for a schematic view of the results.

In the second test, protective efficacies in combination with precipitation (rain stability) of the following treatments were compared:

- Control (water): very good value of disease severity;
- Cuprozin Progress® (a.i. Cupper Hydroxide) (0.323% v/v): satisfactory protective efficacy and good stability to rain;
- PV1 (2.4% v/v): very good protective efficacy and very good stability to rain, both significantly higher to the comparison agent; PV1 is constituted of copper sulphate (Cu 50 g/kg);
- PV3 (2.4% v/v): it was not conform to be sprayed because of the formation of floccules once the formulation was diluted;
- PV4 (2.4% v/v): unacceptable protective efficacy; PV4 differs from PV1 for presence of a suspending agent, lower concentration of copper (25 g/kg) and presence of zinc (18 g/kg);
- PV5 (PV1 1.2% + PV2 2.4% v/v): very good protective efficacy and satisfactory stability to rain, which is similar to the comparison agent.

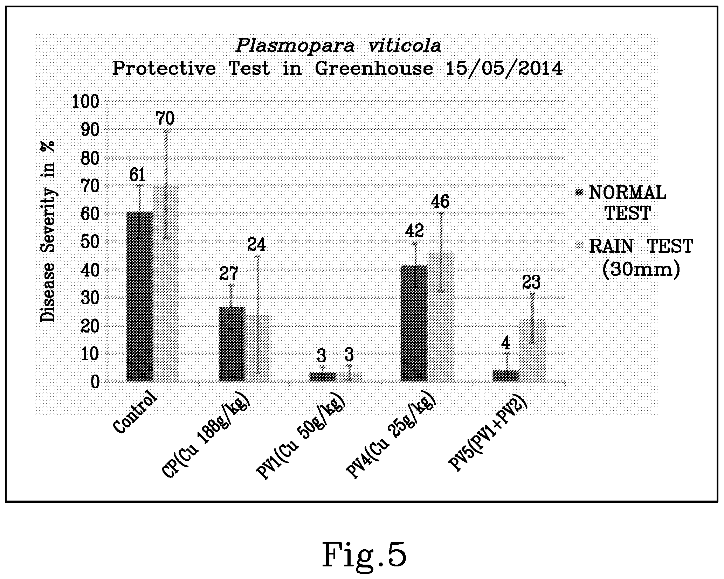

See Fig. 5 for a schematic view of the results.

In the third test, protective efficacies of the following treatments were compared:

- Control (water): very good value of disease severity;
- PV1 (1.2% v/v): very good protective efficacy, which has been achieved applying half concentration than the previous tests; PV1 is constituted of copper sulphate (Cu 50 g/kg);
- PV6 (1.25% v/v): good protective efficacy; PV6 differs from PV1 for presence of a mixture of fertilizers;
- PV7 (1.2% v/v): very good protective efficacy, comparable to PV1; PV7 differs from PV1 for a different co-formulation;
- PV8 (1.2% v/v): unacceptable protective efficacy; PV8 differs from PV1 for a different co-formulation and for presence of copper hydroxide in place of copper sulphate;
- PV8/2 (2.4% v/v): unacceptable protective efficacy, despite it was applied in double concentration, it has showed the highest disease severity of the trial; PV8/2 differs from PV1 for a different co-formulation and for presence of copper hydroxide in place of copper sulphate;
- PV9 (1.2% v/v): very good protective efficacy, comparable to PV1; PV7 differs from PV1 for a different co-formulation and for presence of copper hydroxide in place of copper sulphate, in higher concentration (Cu 100 g/kg);
- BRBC (1.2% v/v): good protective efficacy; BRBC differs from PV1 for presence of vegetal extracts;
- BRBC2 (1.2% v/v) good protective efficacy; BRBC2 differs from BRBC for lower concentration of copper (20 g/kg) and the presence of zinc (10 g/kg).

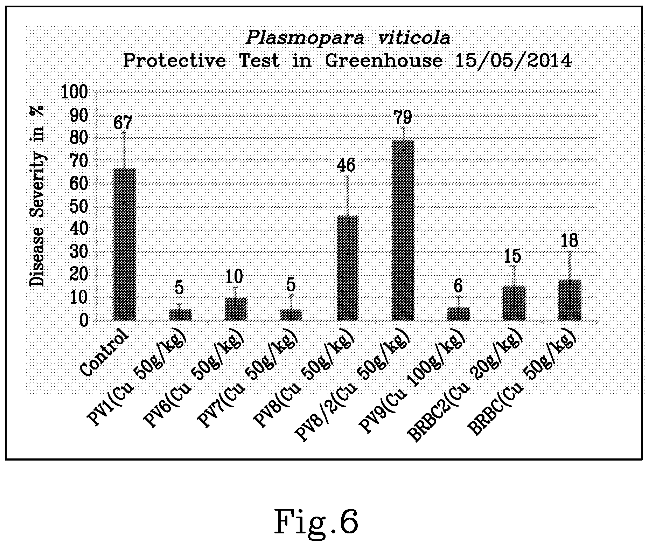

See Fig. 6 for a schematic view of the results.

In the fourth test, the curative efficacies of the following treatments were compared:

- Control (water): very low value of disease severity, probably due to the non freshness of the inoculum or to the non ideal conditions of incubation;
- PV1 (2.4% v/v): the absolute value shows a satisfactory curative efficacy, but it is not significantly different from the control; PV1 is constituted of copper sulphate (Cu 50 g/kg);
- PV1 + MDE (1.6% + 0.8% v/v): the absolute value shows a good curative efficacy, but it is not significantly different from the control; MDE differs from PV1 for lower concentration of copper (45 g/kg) and presence of vegetal extracts;
- PV1 + BRBC2 (1.6% + 0.8% v/v): the absolute value shows an unacceptable curative efficacy, the disease severity is comparable to the control; BRBC2 differs from PV1 for lower concentration of copper (20 g/kg) and the presence of zinc (10 g/kg) and vegetal extracts.

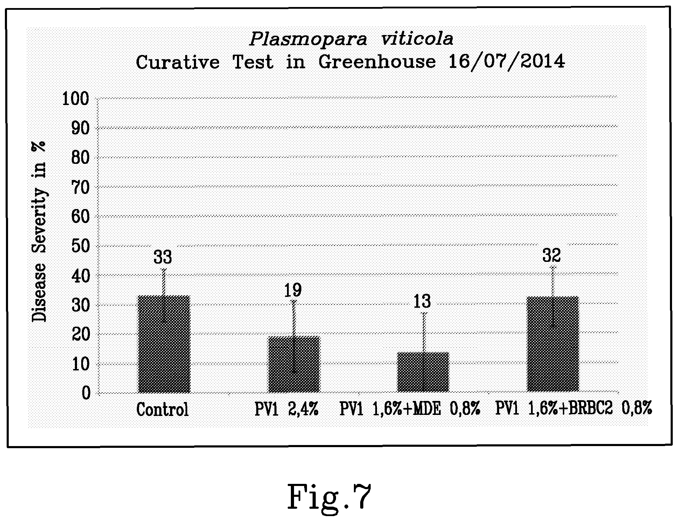

See Fig. 7 for a schematic view of the results.

In the fifth test, the protective efficacies of the following treatments were compared:

- Control (water): low but acceptable value of disease severity;
- PV1 (1.2% v/v): very good protective efficacy; significantly different form the control despite its low value; PV1 is constituted of copper sulphate (Cu 50 g/kg);
- MDE (1.2% v/v): good protective efficacy; significantly different form the control despite its low value; MDE differs from PV1 for lower concentration of copper (45 g/kg) and presence of vegetal extracts;
- FDLN (1.2% v/v): satisfactory protective efficacy; FDLN differs from PV1 for presence of vegetal extracts;
- FDLN2 (1.2% v/v): unacceptable protective efficacy; FDLN2 differs from FDLN for lower concentration of copper (20 g/kg) and presence of zinc (10 g/kg);
- FDLN3 (1.2% v/v): unacceptable protective efficacy; FDLN3 differs from FDLN for lower concentration of copper (20 g/kg), presence of zinc (10 g/kg) and vegetal extracts in powder; the test agent was not fully conform to be sprayed because of the nuzzle stoppage;
- FDLN4 (1.2% v/v): unacceptable protective efficacy: FDLN4 differs from FDLN for lower concentration of copper (20 g/kg), presence of zinc (10 g/kg) and hydro-alcoholic vegetal extracts; the test agent was not fully conform to be sprayed because of the nuzzle stoppage; BC (1.2% v/v): unacceptable protective efficacy: BC differs from PV1 for absence of copper and presence of zinc (20 g/kg) and of vegetal extracts;
- BC2 (1.2% v/v): unacceptable protective efficacy: BC2 differs from BC for a different co-formulation.

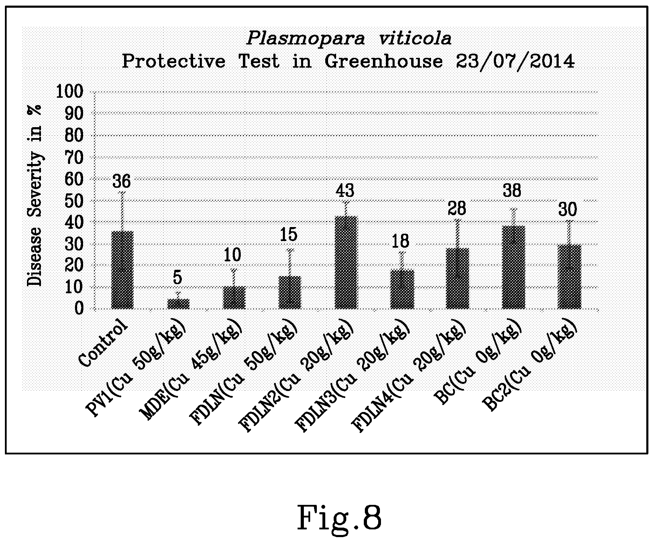

See Fig. 8 for a schematic view of the results.

4. POWDERY MILDEW (*Erysiphe necator*)

4.1 Laboratory Test

The biological efficacy assessment of test agents against *Erysiphe necator* was performed only in laboratory by a test in vitro. To this aim several microscope slides were immersed in a beaker containing water agar medium and then placed in petri dishes.

Once the water agar medium solidified on the microscope slide, one beaker per each factor was filled with the respective solution (water, comparison agent and test agent). The microscope slides covered by water agar medium were immediately removed from the petri dishes to be immersed for few seconds into the beakers; six slides were prepared per each solution.

Grapevine leaves with fresh and prominent symptoms of *Erysiphe necator* were collected from infected potted vines grown in a controlled environment. Discs of 2 cm of diameter were cut from the infected leaves, taking care to select upper leaf surface areas rich in powdery mildew conidia visible as white, powdery masses of mycelium. Once the microscope slides were dried, a leaf disc was imprinted down on every slide in order to transfer the mycelium on the water agar medium. After leaf discs were removed, three microscope slides per factor were covered by a cover slip and three were left uncovered, then, four drops of demineralised water were filled next to the microscope slide in each petri dish.

The petri dishes, closed by Parafilm, were incubated at 20 °C, under the yellow light, then they were observed at the microscope (magnification 40x) after 20 hours.

The biological efficacy of the test agents was determined in terms of conidia germination, evaluating the ratio between non-germinated conidia (inactive or degenerated) and germinated conidia (active having issued the germination tube) of one hundred conidia.

In the first test, the biological efficacies of the following treatments were compared after 20 hours:

- Control (water): a very low number of germinated conidia was noted, probably due to reasons linked to the biological cycle of the fungi and its low germination rate in controlled environment;
- Vivando (a.i. Metraphenone) (0.064% v/v): no germinated conidia were observed;
- OT (2% v/v): no germinated conidia were observed; OT is constituted of sulphur (400 g/kg).

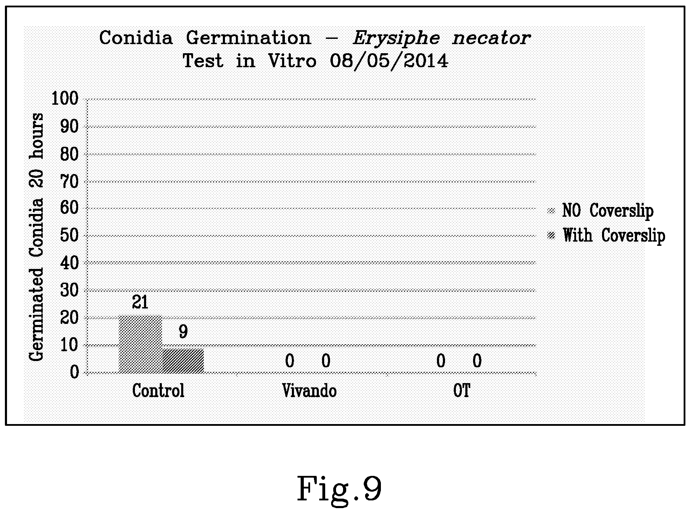

See Fig.9 for a schematic view of the results.

In has to be reported that the low germination rate showed by the control, reduced the reliability of the trial, despite the total pathogen control showed by the comparison agent and the test agent. Contextually to test, it was noted the higher germination rate of the conidia over the microscope slides incubated without coverslip.

5. GREY MOULD (*Botrytis cinerea*)

5.1 Laboratory Test

The biological efficacy assessment of test agents against *Botrytis cinerea* was performed only in laboratory by a test *in vitro.* To this aim, several microscope slides were immersed in a beaker containing water agar medium and then placed into petri dishes.

The inoculum of conidia was prepared selecting three cultures (petri dishes) of *Botrytis cinerea*: 10 ml of distilled water were poured in each petri dish and smeared by a spatula over the entire surface of the mycelium. The conidia suspension obtained was filtered through a sterile plastic tube filled with fiberglass in order to separate parts of mycelium from conidia. The conidia concentration was adjusted to $1*10^6$ conidia/ml (minimum) by counting in a Thoma® chamber at the microscope (magnification 40x) eventually achieved diluting with distilled water. Once the water agar medium was solidified on the microscope slides, 50 $\mu$1 of the conidia suspension were filled on each microscope slide, over which, 50 $\mu$1 of the solution representing each factor (water, comparison agent and test agent) was added on the agar surface. Finally, the microscope slides were covered with cover slips. Six petri dishes were prepared per each factor.

The petri dishes were incubated in a humid box at 25 °C (day/night intervals 12/12). After 48 hours they were observed on the microscope (magnification 40x). The biological efficacy of the test agents was determined in terms of conidia germination, evaluating the ratio between non-germinated conidia (inactive or degenerated) and germinated conidia (active having issued the germination tube) of one hundred conidia.

In the first test, the biological efficacies of the following treatments were compared after 20 hours:

- Control (water): a very high number of germinated conidia was noted;
- Switch® (a.i. Cyprodinil and Fludioxonil) (0.194% p/v): a low number of germinated conidia were observed;
- BRBC (1% v/v): a very low number of germinated conidia was observed; BRBC is constituted of copper sulphate (Cu 50 g/kg) and vegetal extracts;
- BC (1% v/v): a low number of germinated conidia, comparable to the comparison agent, was observed; BC is constituted of zinc sulphate (Zn 20 g/kg) and vegetal extracts.

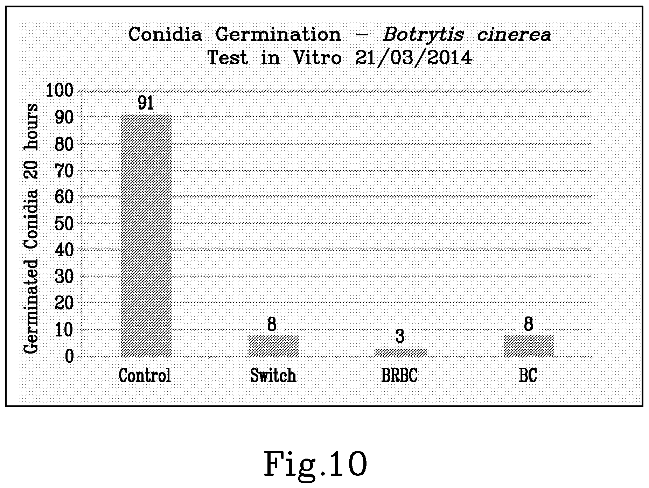

See Fig. 10 for a schematic view of the results

In the second test, the biological efficacies of the following treatments were compared after 20 hours:

- Control (water): a low number of germinated conidia was noted, probably due to reasons linked to the biological cycle of the fungi and its low germination rate in controlled environment;
- Switch® (a.i. Cyprodinil and Fludioxonil) (0.194% p/v): no germinated conidia were observed;
- BRBC (1% v/v): less than the half germinated conidia showed by the control, was observed; BRBC is constituted of copper sulphate (Cu 50 g/kg) and vegetal extracts;
- BC (1% v/v): the number of germinated conidia is comparable to the control and unacceptable; BC is constituted has been observed; BC is constituted of zinc sulphate (Zn 20 g/kg) and vegetal extracts.

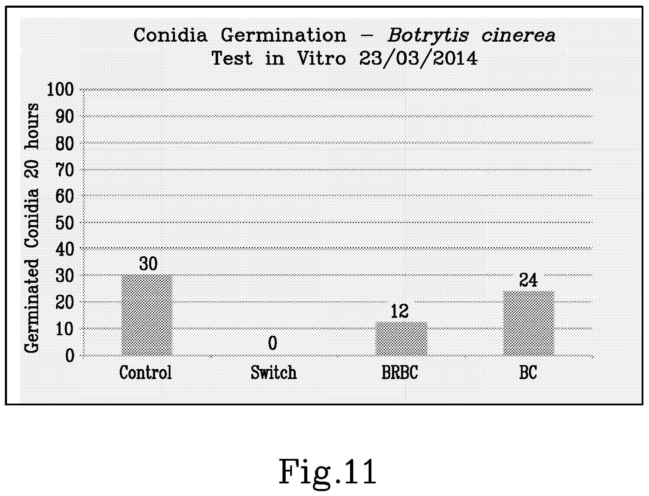

See Fig. 11 for a schematic view of the results

In the third test, the biological efficacies of the following treatments were compared after 20 hours:

- Control (water): a low number of germinated conidia has been noted, probably due to reasons linked to the biological cycle of the fungi and its low germination rate in controlled environment;
- Switch® (a.i. Cyprodinil and Fludioxonil) (0.194% p/v): no germinated conidia were observed;
- BRBC (1% v/v): less than the half germinated conidia showed by the control, was observed; BRBC is constituted of copper sulphate (Cu 50 g/kg) and vegetal extracts;
- BRBC2 (1% v/v): nearly the half germinated conidia showed by the control, was observed; BRBC2 differs from BRBC for lower concentration of copper (20 g/kg) and the presence of zinc (10 g/kg);
- BRBC2/2 (2% v/v): the test agent has showed approximately the absence of germinated conidia; BRBC2/2 differs from BRBC2 for its application in double concentration.

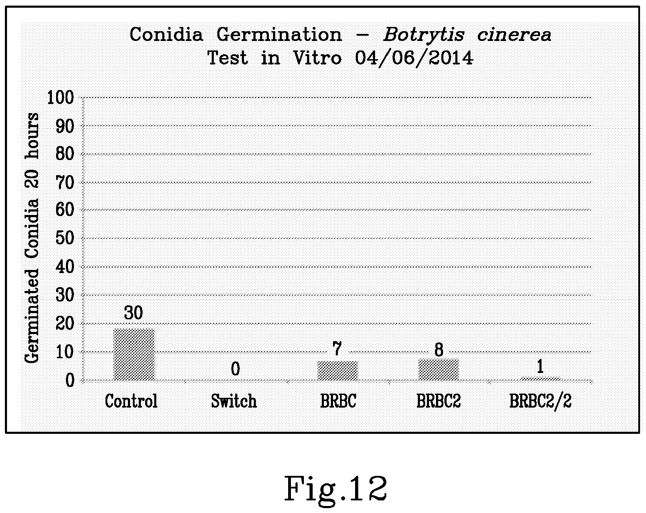

See Fig. 12 for a schematic view of the results

6. BLACK ROT (*Guignardia bidwellii*)

6.1 Laboratory Test

The biological efficacy assessment of test agents against *Guignardia bidwellii* was performed in laboratory by a test in vitro. To this aim several microscope slides were immersed in a beaker containing water agar medium and then placed in petri dishes. The inoculum of conidia has been prepared selecting three cultures (petri dishes) of *Guignardia bidwellii*: 10 ml of distilled water were poured in the first petri dish and smeared by a spatula over the entire surface of the mycelium. After 10 minutes, the suspension obtained was poured in the second petri dish and then in the third and finally it was filtered through a sterile plastic tube filled of fiberglass in order to separate mycelium from conidia. The conidia concentration was adjusted to $1*10^6$ conidia/ml (minimum), by counting in a Thoma® chamber at the microscope (magnification 40x), eventually achieved diluting with distilled water.

Once the water agar medium was solidified on the microscope slides, 50 $\mu$1 of the conidia suspension were filled on each microscope slide, over which, 50 $\mu$1 of the solution representing each factor (water, comparison agent and test agent) was added on the agar surface. Finally, the microscope slides were covered with cover slips. Six petri dishes were prepared per each factor.

The petri dishes were incubated in a humid box at 25 °C (day/night intervals 12/12). After 48 hours they were observed on the microscope (magnification 40x).

The biological efficacy of the test agents was determined in terms of conidia germination, evaluating the ratio between non-germinated conidia (inactive or degenerated) and germinated conidia (active having issued the germination tube and the appressorium) of one hundred conidia.

In the first test, the biological efficacies of the following treatments were compared after 48 hours:

- Control (water): a low number of germinated conidia was noted, probably due to reasons linked to the biological cycle of the fungi and its low germination rate in controlled environment;
- Polyram® (a.i. Metiram) (0.645% p/v): no germinated conidia were observed;
- PV1 (2.4% v/v): no germinated conidia were observed; PV1 is constituted of copper sulphate (Cu 50 g/kg);
- BRBC2 (1.2% v/v): few germinated conidia (without appressorium) were observed; BRBC2 is constituted of copper sulphate (Cu 20 g/kg), zinc sulphate (Zn 10 g/kg) and vegetal extracts.

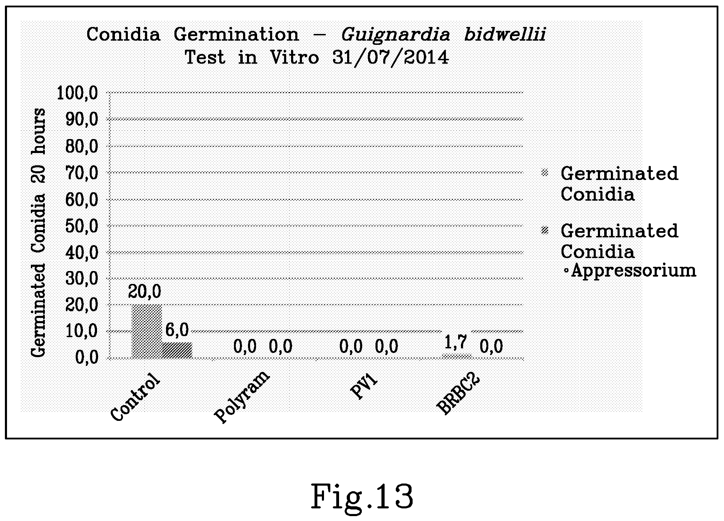

See Fig. 13 for a schematic view of the results

6.2 Greenhouse Test

The greenhouse test was performed to evaluate the protective efficacy of the test agents. To this aim six potted vines were employed per each factor: control (water), comparison agent and test agents. Potted vines were selected for right height, good aspect and number of leaves (minimum seven) and prepared for the treatment, tying the shoot just below the lasts four leaves eligible for the final disease assessment. The first day potted vines were treated with the experimental sprayer and after 24 hours the inoculation of the fungal pathogen was performed on the treated plants. The inoculum of conidia was prepared selecting three cultures (petri dishes) of *Guignardia bidwellii*: 10 ml of distilled water were poured in the first petri dish and smeared by a spatula over the entire surface of the mycelium. After 10 minutes, the suspension obtained was poured in the second petri dish and then in the third, at finally it was filtered through a sterile plastic tube filled of fiberglass in order to separate mycelium from conidia. The conidia concentration was adjusted to $1*10^4$ conidia/ml (minimum), by counting in a Thoma® chamber at the microscope (magnification 40x), eventually achieved diluting with distilled water.

The suspension of conidia was manually sprayed on the treated plants taking care to wet homogeneously the upper surface of the three leaves above the tying point of the shoot. After the inoculation, the table with potted vines was covered with a black plastic tarp, filled at the base with water and transferred in the greenhouse for the disease incubation.

The third day, the treated, inoculated and incubated plants were uncovered and left to grow under control condition. The twelfth day, the disease severity was determinate observing in each potted vine the four leaves above and the three leaves below the tying point of the shoot. Phytotoxicity and the presence of pycnidia form within lesions (on the tendrils, leaf stalks and shoot), were also monitored.

In the first test, the protective efficacies of the following treatments were compared:

- Control (water): good value of disease severity;
- Polyram® (a.i. Metiram) (0.645% p/v): very good protective efficacy;
- PV1 (2.4% v/v): good protective efficacy, not comparable to the comparison agent; PV1 is constituted of copper sulphate (Cu 50 g/kg);

- BRBC2 (1.2% v/v): satisfactory protective efficacy; not comparable to the test agent PV1; BRBC2 is constituted of copper sulphate (Cu 20 g/kg), zinc sulphate (Zn 10 g/kg) and vegetal extracts.

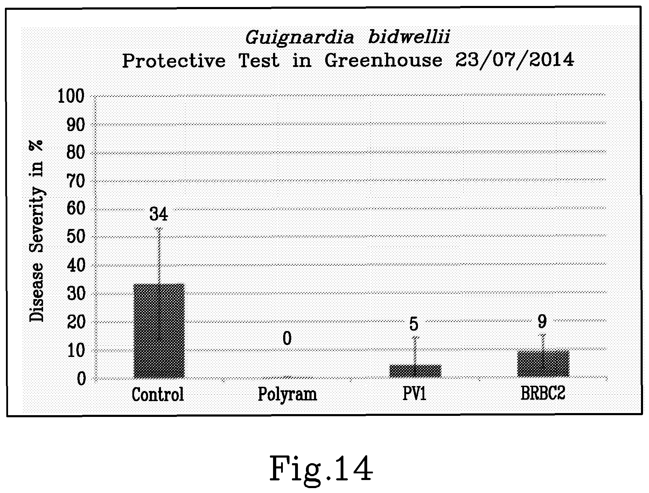

See Fig. 14 for a schematic view of the results

No phytotoxicity on the leaves and no pycnidia formed within lesions (on the tendrils, leaf stalks and shoot), were observed.

7. EUROPEAN GRAPEVINE MOTHS (*Eupoecilia ambiguella*)

7.1 Laboratory test

The biological efficacy assessment of test agents against *Eupoecilia ambiguella* was performed in laboratory by evaluating the mortality rate after a direct treatment of the first instar of *E. ambiguella.* To this aim several tiny pots were filled with a proper artificial diet, on which 3 freshly hatched larvae were put per single pot. Thirty replications have been prepared for each factor: control (water), standard comparison agent (insecticide Steward®) and test agents.

Immediately after that, pots of each factor were placed in a dish that was positioned in the tunnel of the experimental sprayer employed for the greenhouse test (descripted in the introduction). Each dish was treated with the solution representing the appropriate factor. After that, tiny pots were closed and placed in a storage room at the temperature of 25 °C (day) and 20 °C (night) and humidity of 40%.

The mortality rate was determined by monitoring the larvae mortality five days and ten days after the treatment. Data were statistically analysed.

In the first test, the efficacies of the following treatments were compared:

- Control (water): good value of mortality after 5 and 10 days;
- Steward® (a.i. Indoxacarb) (0.0125% p/v): very good value of mortality, significantly different from the control, after five and ten days;
- NEW REP (1% v/v): very low value of mortality, not significantly different from the control, after 5 and 10 days; the test agent has showed just a low tendency to decrease the larvae mortality; NEW REP is constituted of zinc sulphate (Zn 20 g/kg), sulphur (200 g/kg) and vegetal extracts.

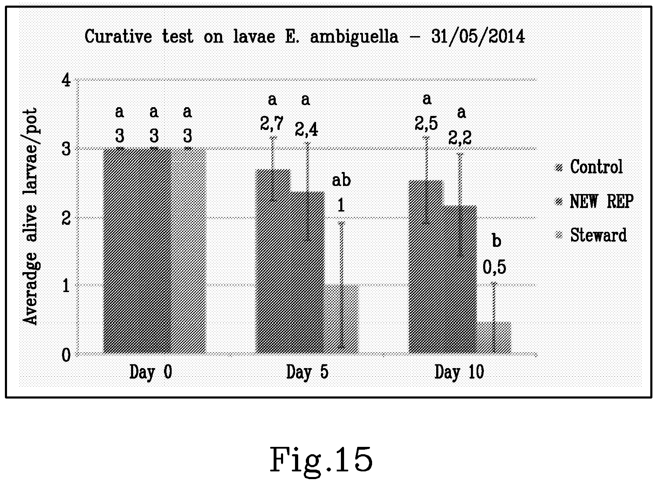

See Fig. 15 for a schematic view of the results

In the second test, the efficacies of the following treatments were compared:

- Control (water): good value of mortality after 5 and 10 days;
- Steward® (a.i. Indoxacarb) (0.0125% p/v): good value of mortality, significantly different from the control after ten days;
- REP (1% v/v): low value of mortality, not significantly different from the control, after 5 and 10 days; the test agent has showed just a tendency to decrease the larvae mortality; REP is constituted of zinc sulphate (Zn 20 g/kg) and vegetal extracts.

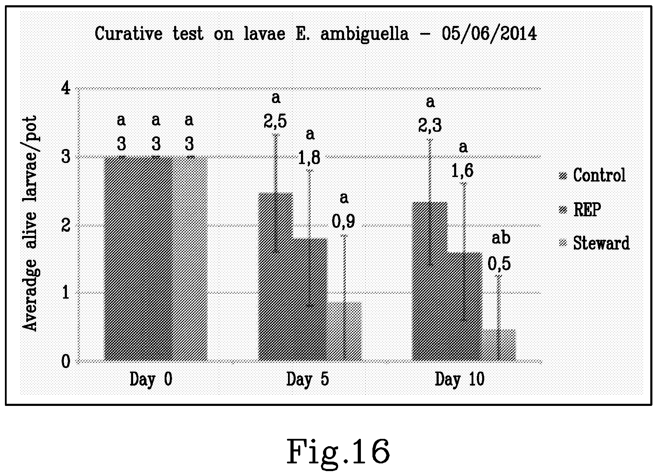

See Fig. 16 for a schematic view of the results

8. VINE MEALYBUG (*Planococcus ficus*)

8.1 Laboratory test

The biological efficacy assessment of test agents against *Planococcus ficus* was performed in laboratory by evaluating the mortality rate after a direct treatment of the first instar of *P. ficus.* To this aim several plastic boxes, appropriate to preserve fresh leaves, were prepared by placing a vine leaf (Müller Thurgau) into the cruet filled of water. Afterwards, ten alive female crawlers of *P. ficus* were transferred, using a special brush, from the potato cultures to each upper leaf, which was then covered by the proper plastic box. Ten plastic boxes were prepared as replications per each factor: control, standard comparison agent (insecticide Confidor®) and test agents. The following day, each leaf was monitored under the stereomicroscope to verify the number of crawlers still alive. In the same day, plastic boxes were uncovered and the leaves were treated manually by laboratory equipment that simulates the nebulisations of the classic sprayer employed in vineyard. After the treatment, leaves were closed into the plastic boxes and placed in a storage room at the temperature of 25 °C (day) and 20 °C (night) and humidity of 40%.

The mortality rate was determinate by monitoring larval mortality, four days and eight days after the treatment.

Data were statistically analysed.

In the first test, the efficacies of the following treatments were compared:

- Control (water): good value of mortality after four and eight days;
- Confidor® (a.i. Imidacloprid) (0.02% p/v): very good value of mortality, significantly different from the control, after four and eight days;
- REP (1% p/v): low value of mortality, not significantly different from the control, after four and eight days; the test agent showed just a tendency to decrease the instar fertility; REP is constituted of zinc sulphate (Zn 20 g/kg) and vegetal extracts.
- NEW REP (1% v/v): low value of mortality, significantly different from the control after eight days; NEW REP differs from REP for the presence of sulphur (200 g/kg).

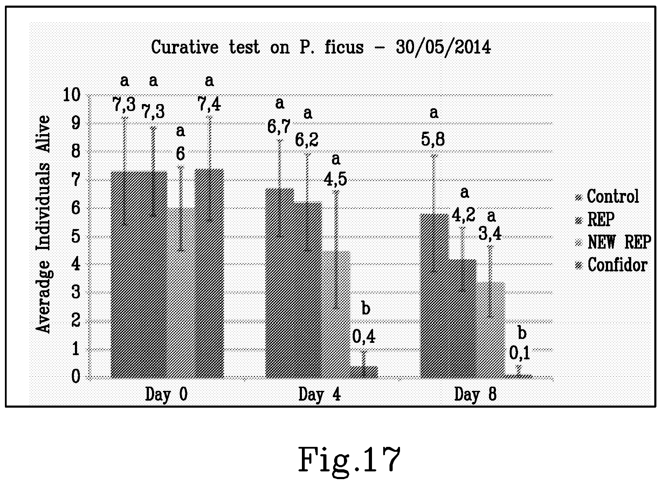

See Fig. 17 for a schematic view of the results

EXPERIMENTAL TESTS ON VINES, TOMATO PLANT, WHEAT APPLE TREE, PEAR TREE AND VEGETABLES

TESTING AGENT CODIFICATION

a) Sample MDE is constituted of water, natural extracts of vegetal origin and carbonate-substituted hydroxyapatite functionalised with copper sulphate (Cu 45 g/kg);
b) Sample PV1 is constituted of water and carbonate-substituted hydroxyapatite functionalised with copper sulphate (Cu 50 g/kg);
c) Sample BRBC is constituted of water, natural extracts of vegetal origin and carbonate-substituted hydroxyapatite functionalised with copper sulphate (Cu 50 g/kg);

1. GRAPEVINE CROWN GALL (Agrobacterium vitis)

Plant: *Vitis vinifera* - Grapevine

a) TEST IN VITRO: The sample MDE was tested in vitro against the Grapevine Crown Gall agent, Agrobacterium vitis. After the incubation in standard condition, the growth of the pathogens was inhibited by the sample MDE (5-10% v/v). It is reported the positive role of HA on the test, optimising significantly the effect of the functional molecule (copper as fungicide) in comparison with conventional active substances (biocide agents) that were not able to inhibit the pathogens growth.
In particular, HA adsorbs ions of copper in its specific surface, which is being very high (100 $m^2/g$), it keeps and releases a high amount of ions.
b) TEST IN NURSERY: on vine rootstocks 41B naturally infected by Agrobacterium vitis and treated during the process of re-hydration with the sample MDE (2% v/v). The molecular analysis on the treated rootstocks showed a significant reduction of the pathogen presence within the treated samples, confirming the translocation effect of HA.

2) LATE BLIGHT OF TOMATOES (Phytophthora infestans)

Plant: Solanum lycopersicum - Tomato

Test was performed in greenhouse, treating potted plats of tomato, with the sample PV1, before (preventive, dose 2.5% v/v) and after (curative, 5% v/v) the artificial inoculation of the pathogen Phytophthora infestans. Results showed a very good preventive efficacy of the treatment, confirming the surface effect of HA.

3) FUSARIUM HEAD BLIGHT OF WHEAT (Fusarium graminearum and Fusarium culmorum)

Plant: Triticum spp - Wheat

a) TEST IN VITRO: The sample BRBC was tested in vitro against the Fusarium Head Blight of wheat agents, Fusarium graminearum and Fusarium culmorum. After 5 days of incubation in standard condition, the growth of the pathogens was inhibited by the sample BRBC (2% v/v). It is reported the positive role of HA on the test, optimising the effect of the functional molecule (natural extracts and copper as fungicides).

b) TEST IN FIELD: treating wheat with the sample BRBC (2% v/v) at the time of flowering when about 40% of the anthers were visible, as preventive test. In an other plot a suspension of Fusarium graminearum and Fusarium culmorum was inoculated, to set up a curative, followed by the application the sample BRBC. The treatment has averagely stopped the development (preventive) and the diffusion (curative) of the disease from one ear to the other, confirming the surface effect of HA.

4) APPLE SCAB (Venturia inaequalis)

Plant: Malus domestica - Apple tree

The curative test was performed in the field, treating, with a solution of 1 kg/ha of MDE + 5 kg/ha of PV1, apple trees naturally infected by Venturia inaequalis. A second treatment was made after 7 days. The apple scab disease was immediately and significantly stopped by the treatments based on HA, while conventional treatments were not able to stop the disease development. The results confirmed the surface and translocation effect of HA.

5) PEAR SCAB (Venturia pirina)

Plant: Pyrus spp - Pear tree (pero)

The curative test was performed in the field, treating, with a solution of 1 kg/ha of MDE + 5 kg/ha of PV1, pear trees naturally infected by Venturia pirina. A second treatment was made after 7 days. The pear scab disease was immediately and significantly stopped by the treatments based on HA, while conventional treatments were not able to stop the disease development. The results confirmed the surface and translocation effect of HA.

6) BROWN SPOT OF PEAR (Stemphylium vesicarium)

Plant: Pyrus spp - Pear tree (pero)

The curative test was performed in the field, treating, with a solution of 1 kg/ha of MDE + 5 kg/ha of PV1, pear trees naturally infected by Stemphylium vesicarium. A second treatment was made after 7 days. The pear scab disease was immediately and significantly stopped by the treatments based on HA, while conventional treatments were not able to stop the disease development. The results confirmed the surface and translocation effect of HA.

7) TESTS ON VEGETABLES

A fungicide effective against downy mildew on grapevine (peronospora della vite), is normally effective against the others forms of mildew on vegetables (varie peronospore degli ortaggi).
This the case of the sample PV1, based on HA, which have showed positive results on protective and curative tests performed in the field, applying a dose variable between 1-6 kg/ha (in function of the amount of water used per application) and for a number of application variable in function of the disease severity. The efficacy is due to the surface effect of HA.
Below the disease controlled on several vegetables:

- Lettuce mildew caused by Bremia lactucae on lettuce;
- Spinach mildew caused by Peronospora spinaceae;
- Cucurbits mildew caused by Pseudoperonospora cubensis on cantaloupe, cucumber, pumpkin, squash and watermelon;
- Onion mildew caused by Peronospora schleideni;
- Leek mildew caused by Phytophtora porri;
- Peas mildew caused by Peronospora pisi.

EXPERIMENTAL TESTS ON WEEDS

Three formulations containing water, carbonate-substituted hydroxyapatite (HCA) were functionalized with an herbicide.

The trial was evaluated comparing commercial product containing Glyhosate (N-(phosphonomethyl)glycine) and different suspensions of carbonate-substituted hydroxyapatite (HCA) functionalised by the same active molecule according to the following scheme:

A) CONTROL Glyphosate 480 g/L (application in solution 5% v/v)
B) BLDS HCA functionalised by Glyphosate 160 g/L (application in solution 5% v/v)
C) BLDS HCA functionalised by Glyphosate 240 g/L (application in solution 5% v/v).

The trials have been conducted on different weeds:

- Cynodon spp.
- Sorghum halepense
- Convolvulus spp.

1) Trials on Convolvulus spp.:

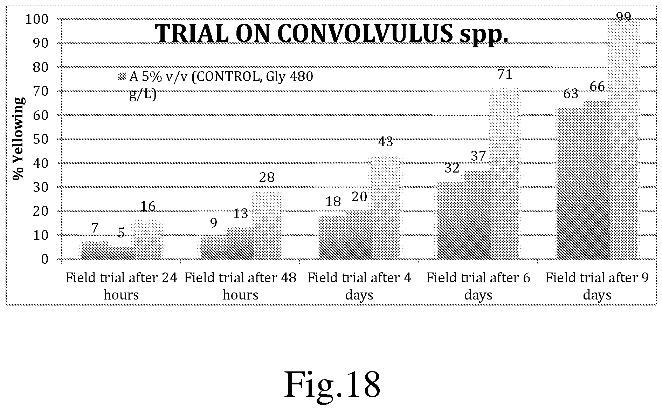

Figure 18 shows how HCA functionalised by different concentration of herbicide glyphosate is able to kill the weed in less time than commercial product and with less concentration of active ingredient.
Even reducing the content of active ingredient to 50% of standard dosage, the HCA functionalised shows a better effect from the beginning of the trial to the end of it (99% of yellowing vs 63% of yellowing for control after 9 days).

2) Trials on Cynodon spp.

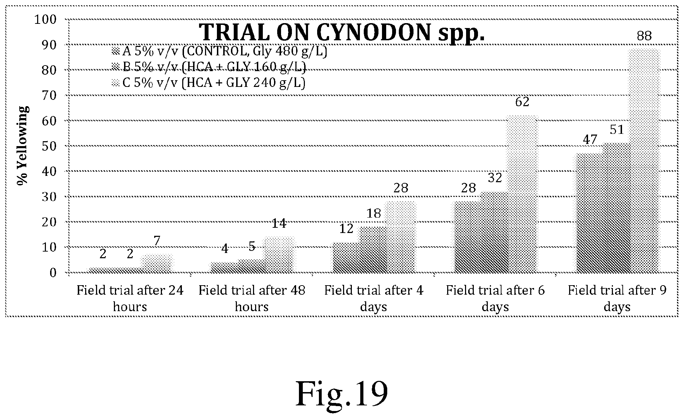

Figure 19 shows how HCA functionalised by different concentration of herbicide glyphosate is able to kill the weed in less time than commercial product and with less concentration of active ingredient.
Even reducing the content of active ingredient to 50% of standard dosage, the HCA functionalised shows a better effect from the beginning of the trial to the end of it (88% of yellowing vs 47% of yellowing for control after 9 days).

3) Trials on Sorghum halepense.

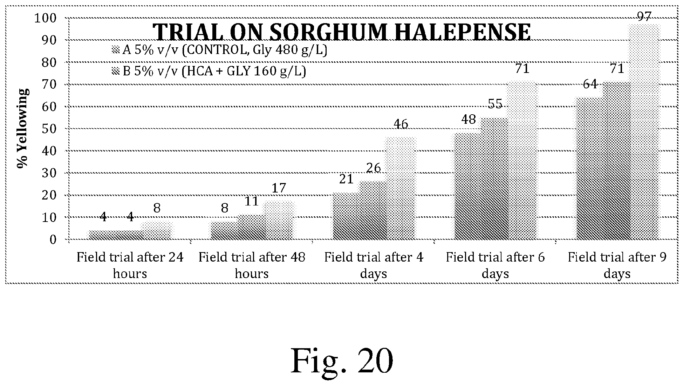

Figure 20 shows how HCA functionalised by different concentration of herbicide glyphosate is able to kill the weed in less time than commercial product and with less concentration of active ingredient.
Even reducing the content of active ingredient to 50% of standard dosage, the HCA functionalised shows a better effect from the beginning of the trial to the end of it (97% of yellowing vs 64% of yellowing for control after 9 days).

**Claims**

1. A use of at least one substituted hydroxyapatite particle comprising of at least one bioactive molecule, or of a composition containing it, for treating plants wherein the hydroxyapatite particle is substituted with at least one carbonate ion; and
   wherein the bioactive molecule is an ion selected from Cu, Zn, S, P, Ca or essential oils of plant origin or mixture thereof; and
   wherein the bioactive molecule is adsorbed on the substituted hydroxyapatite.

2. The use according to claim 1, for the phytosanitary treatment and/or nutritional treatment of plants.

3. The use according to claim 1 and 2, wherein the plants are vines, tomato plant (Solanum lycopersicum), wheat (Triticum spp), pear tree (Pyrus spp), apple tree (Malus domestica) and vegetable plants, such as lettuce, spinach, cucurbits, onion, leek, peas.

4. The use according to anyone of claim 1 to 3, wherein the bioactive molecule has an anti-parasite activity, preferably against fungi, bacteria, cryptogams and insects, and/or a nutritional activity as fertilizer or growth enhancer.

5. The use according to claim 4, wherein the anti-parasite activity of the bioactive molecule is for the prevention and treatment of downy mildew (caused by Plasmopara viticola), powdery mildew (caused by Erysiphe nectar), Grey mould (caused by Botrytis cinerea), black rot (caused by Guignardia bidwellii), grapevine crown gall (caused by Agrobacterium vitis), late blight of tomatoes (caused by Phytophthora infestans), fusarium head blight of wheat (caused by Fusarium graminearum and Fusarium culmorum), apple scab (caused by Venturia inaequalis), pear scab (caused by Venturia pirina), brown spot of pear (caused by Stemphylium vesicarium), Lettuce mildew (caused by Bremia lactucae), Spinach mildew (caused by Peronospora spinaceae), Cucurbits mildew (caused by Pseudoperonospora cubensis on cantaloupe, cucumber, pumpkin, squash and watermelon), Onion mildew (caused by Peronospora schleideni), Leek mildew (caused by Phytophtora porri), Peas mildew (caused by Peronospora pisi), diseases caused by the insects: European grapevine moths (Eupoecilia ambiguella) and vine mealybug (Planococcus ficus).

6. The use according to claim 1, wherein the essential oils of plant origin are selected from mint, thyme, rosemary, sesame, soya, cloves, garlic, lemon or cinnamon.

7. The use according to anyone of claims 1 to 6, wherein the hydroxyapatite particle is substituted by at least one carbonate ion responding to the formula:

$$Ca_{(10)}(PO_4)_{(6-y)}(CO_3)_y(OH)_2$$

wherein y is a number comprised between 0.002 and 0.6,
and having a crystallinity degree comprised between 25 and 59%, preferably between 25 and 40%.

8. The use according to anyone of the previous claims, wherein the hydroxyapatite particle is smaller than 2 $\mu$m.

9. The use according to anyone of the previous claims, **characterised in that** the hydroxyapatite particle is used in the form of aggregates of a plurality of hydroxyapatite particles.

10. The use according to anyone of the previous claims, **characterised in that** the hydroxyapatite particle is applied to the plants in a liquid composition optionally as a spray onto the leaves, trunk, wood or roots of the plants to be treated.


**Patentansprüche**

1. Verwendung von mindestens einem substituierten Hydroxyapatitpartikel, umfassend mindestens ein bioaktives Molekül oder von einer Zusammensetzung, die dieses enthält, zur Behandlung von Pflanzen,
wobei das Hydroxyapatitpartikel mit mindestens einem Carbonation substituiert ist; und
wobei das bioaktive Molekül ein Ion ist, das aus Cu, Zn, S, P, Ca oder ätherischen Ölen pflanzlichen Ursprungs oder Mischungen davon ausgewählt ist; und
wobei das bioaktive Molekül an dem substituierten Hydroxyapatit adsorbiert ist.

2. Verwendung nach Anspruch 1 zur Phytosanitärbehandlung und/oder Ernährungsbehandlung von Pflanzen.

3. Verwendung nach Anspruch 1 und 2, wobei die Pflanzen Reben, Tomatenpflanzen (Solanum lycopersicum), Weizen (Triticum spp), Birnbaum (Pyrus spp), Apfelbaum (Malus domestica) und Gemüsepflanzen wie Kopfsalat, Spinat, Kürbisgewächse, Zwiebel, Lauch, Erbsen sind.

4. Verwendung nach einem der Ansprüche 1 bis 3, wobei das bioaktive Molekül eine Antiparasitenaktivität, vorzugsweise gegen Pilze, Bakterien, Kryptogame und Insekten, und/oder eine Ernährungsaktivität als Düngemittel oder Wachstumsverstärker aufweist.

5. Verwendung nach Anspruch 4, wobei die Antiparasitenaktivität des bioaktiven Moleküls zur Vorbeugung und Behandlung vor/von falschem Mehltau (hervorgerufen durch Plasmopara viticola), echtem Mehltau (hervorgerufen durch Erysiphe nectar), Grauschimmel (hervorgerufen durch Botrytis cinerea), Schwarzfäule (hervorgerufen durch Guignardia bidwellii), Wurzelhalsgalle (hervorgerufen durch Agrobacterium vitis), Spätfäule von Tomaten (hervorgerufen durch Phytophthora infestans), Ährenfusariose von Weizen (hervorgerufen durch Fusarium graminearum und Fusarium culmorum), Apfelschorf (hervorgerufen durch Venturia inaequalis), Birnenschorf (hervorgerufen durch Venturia pirina), brauner Fleck in der Birne (hervorgerufen durch Stemphylium vesicarium), Kopfsalatmehltau (hervorgerufen durch Bremia lactucae), Spinatmehltau (hervorgerufen durch Peronospora spinaceae), Kürbismehltau (hervorgerufen durch Pseudoperonospora cubensisis an Kantalupe, Gurke, Kürbis, Squash-Kürbis und Wassermelone), Zwiebelmehltau (hervorgerufen durch Peronospora schleideni), Lauchmehltau (hervorgerufen durch Phytophtora porri), Erbsenmehltau (hervorgerufen durch Peronospora pisi), Krankheiten hervorgerufen durch die Insekten: Einbindige Traubenwickler (Eupoecilia ambiguella) und Reblaus (Planococcus ficus), ist.

6. Verwendung nach Anspruch 1, wobei die ätherischen Öle pflanzlichen Ursprungs aus Minze, Thymian, Rosmarin, Sesam, Soja, Nelken, Knoblauch, Zitrone oder Zimt ausgewählt sind.

7. Verwendung nach einem der Ansprüche 1 bis 6, wobei das Hydroxyapatitpartikel durch mindestens ein Carbonation substituiert ist, das der Formel entspricht:

$$Ca_{(10)}(PO_4)_{(6-y)}(CO_3)_y(OH)_2$$

wobei y eine Zahl zwischen 0,002 und 0,6 ist und einen Kristallinitätsgrad zwischen 25 und 59%, vorzugsweise zwischen 25 und 40% aufweist.

8. Verwendung nach einem der vorhergehenden Ansprüche, wobei das Hydroxyapatitpartikel kleiner als 2 $\mu$m ist.

9. Verwendung nach einem der vorhergehenden Ansprüche, **dadurch gekennzeichnet, dass** das Hydroxyapatitpartikel in Form von Aggregaten einer Vielzahl an Hydroxyapatitpartikeln verwendet wird.

10. Verwendung nach einem der vorhergehenden Ansprüche, **dadurch gekennzeichnet, dass** das Hydroxyapatitpartikel in einer flüssigen Zusammensetzung auf die Pflanzen wahlweise als Sprühmittel auf die Blätter, den Stamm, das Holz oder die Wurzeln der zu behandelnden Pflanzen aufgetragen ist.

## Revendications

1. Utilisation d'au moins une particule d'hydroxyapatite substituée comprenant au moins une molécule bioactive ou une composition la contenant pour traiter des plantes dans laquelle la particule d'hydroxyapatite est substituée par au moins un ion carbonate ; et
dans laquelle la molécule bioactive est un ion sélectionné à partir de Cu, Zn, S, P, Ca ou des huiles essentielles d'origine végétale ou leur mélange ; et
dans laquelle la molécule bioactive est absorbée sur l'hydroxyapatite substituée.

2. Utilisation selon la revendication 1, pour le traitement phytosanitaire et/ou traitement nutritionnel de plantes.

3. Utilisation selon les revendications 1 et 2, dans laquelle les plantes sont des vignes, des plants de tomates (Solanum lycopersicum), du blé (Triticum spp), des poiriers (Pyrus spp), des pommiers (Malus domestica) et des plantes légumières telles que la laitue, les épinards, les cucurbitacées, l'oignon, le poireau, les petits pois.

4. Utilisation selon l'une quelconque des revendications de 1 à 3, dans laquelle la molécule bioactive a une activité antiparasites, de préférence contre les champignons, les bactéries, les cryptogames et les insectes, et/ou une activité nutritionnelle comme fertilisant ou activateur de croissance.

5. Utilisation selon la revendication 4, dans laquelle l'activité antiparasites de la molécule bioactive est destinée à la prévention et au traitement du mildiou (provoqué par le Plasmopara viticola), de l'oïdium (provoqué par l'Erysiphe nectar), la pourriture grise (provoquée par le Botrytis cinerea), la pourriture maculée (provoquée par le Guignardia bidwellii), le crown gall de la vigne (provoqué par l'Agrobacterium vitis), le mildiou des tomates (provoqué par le Phytophthora infestans), la fusariose de l'épi de blé (provoquée par le Fusarium graminearum et le Fusarium culmorum), la tavelure des pommes (provoquée par le Venturia inaequalis), la tavelure des poires (provoquée par le Venturia pirina), les taches brunes de la poire (provoquées par le Stemphylium vesicarium), le mildiou de la laitue (provoqué par le Bremia lactucae), le mildiou de l'épinard (provoqué par le Peronospora spinaceae), le mildiou des cucurbitacées (provoqué par le Pseudoperonospora cubensis sur cantaloup, concombre, potiron, courge et pastèque), le mildiou de l'oignon (provoqué par le Peronospora schleideni), le mildiou du poireau (provoqué par le Phytophtora porri), le mildiou des petits pois (provoqué par le Peronospora pisi), les maladies provoquées par les insectes : les eudémis (Eupoecilia ambiguella) et les cochenilles de la vigne (Planococcus ficus).

6. Utilisation selon la revendication 1, dans laquelle les huiles essentielles d'origine végétale sont sélectionnées à partir de menthe, thym, romarin, sésame, soja, clous de girofle, ail, citron ou cannelle.

7. Utilisation selon l'une quelconque des revendications de 1 à 6, dans laquelle la particule d'hydroxyapatite est substituée par au moins un ion carbonate répondant à la formule :

$$Ca_{(10)}(PO_4)_{(6-y)}(CO_3)_y(OH)_2$$

où y est un nombre compris entre 0,002 et 0,6 et ayant un degré de cristallinité compris entre 25 et 59 %, de préférence entre 25 et 40 %.

8. Utilisation selon l'une quelconque des revendications précédentes, dans laquelle la particule d'hydroxyapatite est inférieure à 2 $\mu$m.

9. Utilisation selon l'une quelconque des revendications précédentes, **caractérisée en ce que** la particule d'hydroxyapatite est utilisée sous forme d'agrégats d'une pluralité de particules d'hydroxyapatite.

10. Utilisation selon l'une quelconque des revendications précédentes, **caractérisée en ce que** la particule d'hydroxyapatite est appliquée aux plantes en une composition liquide éventuellement comme un spray sur les feuilles, le tronc, le bois ou les racines des plantes à traiter.

Fig.1

Fig.2

Fig.3

Fig.4

Fig.5

Fig.6

EP 3 071 039 B1

Fig.7

Fig.8

Fig.9

Fig.10

Conidia Germination — *Botrytis cinerea*
Test in Vitro 23/03/2014

Fig.11

EP 3 071 039 B1

Fig.12

Fig.13

Fig.14

Fig.15

EP 3 071 039 B1

Fig.16

Fig.17

Fig.18

Fig.19

Fig. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0640284 A
- EP 2029480 A

- RO 122830

**Non-patent literature cited in the description**

- **LANDI et al.** *J.Eur. Ceram. Soc.,* 2000, vol. 20, 2377-2387